# EUROPÄISCHE PATENTANMELDUNG

(11) **EP 2 003 156 A1**
(43) Veröffentlichungstag der Anmeldung: **17.12.2008**
(21) Anmeldenummer: 08154590.7
(22) Anmeldetag: 16.04.2008
(51) Int. Cl.: C08G 18/12, C08G 18/32, C08G 18/48, C08G 18/50, C08G 18/66, C08G 18/67, C08G 18/69, C08G 18/72, C08G 18/79, C08J 9/14, C08G 101/00

(54) **Urethangruppen und Isocyanatgruppen enthaltende Prepolymere**

(30) Priorität: 19.04.2007 EP 07106470
(71) Anmelder: BASF SE, 67056 Ludwigshafen (DE)
(72) Erfinder: Reese, Hans-Jürgen, 49401, Damme (DE); Ruppel, Raimund, 68165, Mannheim (DE); Reese, Oliver, 49448, Lemförde (DE); Krawczyk, Sylvia, 49356, Diepholz (DE)

(57) **Zusammenfassung**

Gegenstand der Erfindung sind Urethangruppen und Isocyanatgruppen enthaltende Prepolymere, hergestellt durch Umsetzung von
a) Polyisocyanaten mit
b) Verbindungen mit mindestens zwei mit Isocyanatgruppen reaktiven Wasserstoffatomen,

dadurch gekennzeichnet, dass die Verbindungen mit mindestens zwei mit Isocyanatgruppen reaktiven Wasserstoffatomen b) mindestens ein Polyol bi), hergestellt durch Umsetzung von eines Polybutadienpolyols mit Alkylenoxid unter Verwendung eines DMC-Katalysators, enthalten.

## Beschreibung

Gegenstand der Erfindung sind Urethangruppen und Isocyanatgruppen enthaltende Prepolymere, ihre Herstellung und ihre Verwendung zur Herstellung von Polyurethanen.

Polyurethane sind seit langem bekannt und vielfach in der Literatur beschrieben. Ihre Herstellung erfolgt üblicherweise durch Umsetzung von Polyisocyanaten mit Verbindungen mit mindestens zwei mit Isocyanatgruppen reaktiven Wasserstoffatomen. Die Polyurethane können kompakt oder, bei Mitverwendung von Treibmitteln, geschäumt sein.

Häufig werden die Polyisocyanate in Form von Isocyanatgruppen und Urethangruppen enthaltenden Verbindungen, sogenannten Prepolymeren, eingesetzt. Damit lassen sich bestimmte Eigenschaften der Polyurethane gezielt einstellen. Weiterhin kann damit die Handhabung von festen Isocyanaten, insbesondere Diphenylmethandiisocyanat, verbessert werden.

Eine Sonderstellung nehmen die Einkomponentenschäume, auch als Ortschäume oder Montageschäume bezeichnet, ein. Dabei handelt es sich um Schäume, die durch Entspannung und Aufschäumen eines in einem Druckbehälter mit Treibmitteln vorliegenden Prepolymeren und dessen nachfolgende Aushärtung durch Luftfeuchtigkeit entstehen. Ihre Anwendung erfolgt insbesondere bei Bauanwendungen, vorzugsweise zum Fixieren von Fenstern und Türen.

Für viele Anwendungen ist eine hydrophobe Ausrüstung der Polyurethane vorteilhaft. Dazu ist eine Reihe von Verfahren bekannt. So ist es möglich, hydrophobierend wirkende Verbindungen in das Polyurethanpolymere einzubauen. Dabei sollten diese Verbindungen möglichst in die Polyurethan-Matrix eingebaut werden.

Häufig werden dazu Polybutadienpolyole eingesetzt. Durch den Einbau derartiger Verbindungen ist es außerdem möglich, den Polyurethanen gummiartige Eigenschaften zu verleihen. Aufgrund ihres unpolaren Charakters sind OH-terminierte Polybutadiene in Polyurethansystemen jedoch nur begrenzt einsetzbar. Zum einen sind diese OHterminierten Polybutadiene in polyolischen Gemischen nur mit sehr niedermolekularen Polyolen und dabei auch mit diesen nur begrenzt mischbar, zum anderen ist der Weg, eigenschaftsbestimmende Mengen an OH-terminiertem Polybutadien über das Isocyanatprepolymere in das Polyurethan-System einzubauen, durch Viskositätsprobleme bei höheren Einsatzmengen begrenzt.

Es ist auch bekannt OH-terminiertes Polybutadien durch Alkoxylierung mit Polyetherendketten zu versehen. Die übliche alkalische Katalyse zur Anlagerung der Alkylenoxide an das OH-terminierte Polybutadien ist jedoch auf Grund der schlechten Mischbarkeit des Polybutadiens mit den in wässriger Lösung vorliegenden alkalischen Katalysators kaum möglich.

JP 3281519 beschreibt die Herstellung von Umsetzungsprodukten von OH-terminiertem Polybutadien mit Alkylenoxiden unter Verwendung von Doppelmetallcyanidkatalysatoren, auch als DMC-Katalysatoren bezeichnet. Damit können alkoxylierte Polybutadienpolyole mit guten Eigenschaften hergestellt werden. In diesem Dokument wird auch die Herstellung von Polyurethan-Elastomeren unter Verwendung der alkoxylierten Polybutadienpolyole als Polyolkomponente beschrieben, wobei die alkoxylierten Polybutadienpolyole in Kombination mit anderen Polyolen eingesetzt werden.

Nachteilig an dem beschriebenen Verfahren ist insbesondere die schlechte Mischbarkeit der alkoxylierten Polybutadienpolyole mit den übrigen Bestandteilen der Polyolkomponente. Dies kann zu Problemen bei der Herstellung der Polyurethane und zu einer Verschlechterung von deren Eigenschaften führen.

Es war Aufgabe der vorliegenden Erfindung, ein Verfahren zur Herstellung von hydrophoben Polyurethanen unter Verwendung von alkoxylierten Polybutadienpolyolen zu finden, das problemlos durchführbar ist, zu Polyurethanen mit guten Eigenschaften führt und zur Herstellung von Ein-Komponenten-Polyurethanschäumen einsetzbar ist. Dabei sollten insbesondere auch bei Ein-Komponenten-Polyurethanschäumen sowohl die hydrophoben gummiartigen Eigenschaften in den Polyurethanen als auch die Hydrophobie erhalten bleiben.

Die Aufgabe konnte überraschenderweise gelöst werden, indem bei der Herstellung der Polyurethane, die alkoxylierten Polybutadienpolyole zusammen mit Verbindungen mit mindestens zwei mit Isocyanatgruppen reaktiven Wasserstoffatomen und dieses Gemisch im Unterschuss mit einem Polyisocyanat zu einem Isocyanatgruppen und Urethangruppen enthaltenden Prepolymeren umgesetzt werden. Dieses kann mit Verbindungen mit mindestens zwei mit Isocyanatgruppen reaktiven Wasserstoffatomen zum Polyurethanprodukt oder mit Wasser zu Polyurethan- oder Polyurethanpolyharnstoffschaum umgesetzt werden.

Gegenstand der Erfindung sind demzufolge Urethangruppen und Isocyanatgruppen enthaltende Prepolymere, hergestellt durch Umsetzung von:
a) Polyisocyanaten mit
b) Verbindungen mit mindestens zwei mit Isocyanatgruppen reaktiven Wasserstoffatomen, dadurch gekennzeichnet, dass die Verbindungen mit mindestens zwei mit Isocyanatgruppen reaktiven Wasserstoffatomen b) mindestens ein Polyol bi), hergestellt durch Umsetzung von eines Polybutadienpolyols mit Alkylenoxid unter Verwendung eines DMC-Katalysators, enthalten.

Gegenstand der Erfindung ist weiterhin ein Verfahren zur Herstellung der erfindungsgemäßen Prepolymere.

Gegenstand der Erfindung ist weiterhin ein Verfahren zur Herstellung von Polyurethanen durch Umsetzung von
a) Polyisocyanaten mit
b) Verbindungen mit mindestens zwei mit Isocyanatgruppen reaktiven Wasserstofftomen, dadurch gekennzeichnet, dass als Polyisocyanate a) die erfindungsgemäßen Urethangruppen und Isocyanatgruppen enthaltende Prepolymere eingesetzt werden.

Gegenstand der Erfindung ist weiterhin ein Verfahren zur Herstellung von 1-Komponenten-Polyurethan-Schaumstoffen durch Umsetzung von Umsetzung von
a) Polyisocyanaten mit
b) Verbindungen mit mindestens zwei mit Isocyanatgruppen reaktiven Wasserstoffatomen, dadurch gekennzeichnet, dass die Verbindungen mit mindestens zwei mit Isocyanatgruppen reaktiven Wasserstoffatomen b) mindestens ein Polyol bi), hergestellt durch Umsetzung von eines Polybutadienpolyols mit Alkylenoxid unter Verwendung eines DMC-Katalysators, enthalten, und die Umsetzung in Anwesenheit von Treibmitteln in einem Druckbehälter durchgeführt wird und das so hergestellte Produkt nach der Entspannung des Druckbehälters mit Feuchtigkeit zu einem 1-Komponenten-Schaum aushärtet.

Der NCO-Gehalt der erfindungsgemäßen Prepolymere liegt vorzugsweise im Bereich zwischen 6 und 30 Gew.-%. Die zur Herstellung der 1-Komponenten-Polyurethan-Schaumstoffe eingesetzten Prepolymere weisen dabei insbesondere einen NCO-Gehalt im Bereich zwischen 6 und 18 Gew.-% auf.

Die Polyole bi) weisen bevorzugt eine Hydroxylzahl im Bereich zwischen 20 und 180 mgKOH/g auf. Zur Herstellung der erfindungsgemäßen Prepolymere können die Polyole bi) allein eingesetzt werden. Bevorzugt ist jedoch deren Einsatz im Gemisch mit weiteren Verbindungen mit mindestens zwei mit Isocyanatgruppen reaktiven Wasserstoffatomen bii).

Die Herstellung Polyols bi) erfolgt, wie beschreiben, durch Anlagerung von Alkylenoxiden an H-funktionelle Startsubstanzen unter Verwendung von DMC-Katalysatoren.

Als DMC-Katalysatoren können die allgemein bekannten DMC-Katalysatoren eingesetzt werden. Vorzugsweise kommt Zinkhexacyanocobaltat zum Einsatz.

Als Alkylenoxide werden vorzugsweise Ethylenoxid und/oder Propylenoxid eingesetzt.

Die Herstellung der Polyetheralkohole erfolgt bei den dafür üblichen Bedingungen. Zu Beginn der Umsetzung wird die Startsubstanz vorgelegt und, soweit notwendig, Wasser und andere leicht flüchtige Verbindungen entfernt. Dies erfolgt zumeist durch Destillation, vorzugsweise unter Vakuum. Dabei kann der Katalysator bereits in der Startsubstanz vorhanden sein, es ist jedoch auch möglich, den Katalysator erst nach der Behandlung der Startsubstanz zuzusetzen. Bei der letztgenannten Variante wird der Katalysator thermisch weniger belastet. Vor der Dosierung der Alkylenoxide ist es üblich, den Reaktor zu inertisieren, um unerwünschte Reaktionen der Alkylenoxide mit Sauerstoff zu vermeiden. Danach erfolgt die Dosierung der Alkylenoxide beziehungsweise einer Mischung aus Alkylenoxiden und der Startsubstanz, wobei die Anlagerung in der oben beschriebenen Weise durchgeführt wird. Die Anlagerung der Alkylenoxide erfolgt zumeist bei Drücken im Bereich von 0,01 bar und 10 bar und Temperaturen im Bereich von 50 bis 200 °C, vorzugsweise 90 bis 150 °C. Es hat sich gezeigt, dass die Geschwindigkeit, mit der die Alkylenoxide dosiert werden, ebenfalls einen Einfluss auf die Reaktivität der entstehenden Polyetheralkohole hat. Je schneller die Alkylenoxide dosiert werden, desto höher ist die Reaktivität der resultierenden Polyetheralkohole. Nach der Anlagerung der Alkylenoxide wird zumeist eine Nachreaktionsphase zur vollständigen Umsetzung der Alkylenoxide angeschlossen. Danach werden nicht umgesetzte Monomeren und leichtflüchtige Verbindungen aus der Reaktionsmischung entfernt, üblicherweise mittels Destillation. Der Katalysator kann üblicherweise im Polyetheralkohol verbleiben, es ist jedoch prinzipiell möglich, ihn ganz oder teilweise zu entfernen, beispielsweise mittels Filtration. Der fertige Polyetheralkohol wird üblicherweise gegen thermooxidativen Abbau stabilisiert, zumeist durch Zusatz von Antioxidantien, wie sterisch gehinderten Aminen oder Phenolen.

Das alkoxylierte Polybutadiendiol bi) kann allein zur Herstellung der Prepolymere eingesetzt werden. Es ist jedoch auch möglich, die Komponente bi) gemeinsam mit einem anderen Polyol bii) einzusetzen.

In einer Ausführungsform der Erfindung ist das weitere Polyol bii) ein Polyetherdiol bii1) mit einer Hydroxylzahl im Bereich zwischen 25 und 1800 mgKOH/g.

In einer anderen Ausführungsform der Erfindung ist das weitere Polyol bii) ein Polyethertriol bii2) mit einer Hydroxylzahl im Bereich zwischen 20 und 160 mgKOH/g.

In einer anderen Ausführungsform der Erfindung ist das weitere Polyol bii) ein Polyesteralkohol bii3) mit einer Hydroxylzahl im Bereich von 25 und 250 mgKOH/g.

In einer anderen Ausführungsform der Erfindung ist das weitere Polyol bii) eine Mischung aus einem Polyetheralkohol bii2) und einem Polyesteralkohol bii3). Dabei liegen die Polyole bii2) und bii3) bevorzugt im Gewichtsverhältnis 5 : 1 bis 1 : 5 vor.

Als Polyisocyanate a) können alle üblichen aliphatischen und aromatischen Polyisocyanate eingesetzt werden. Beispiele hierfür sind Hexamethylendiisocyanat (HDI), Isophorondiisocyanat (IPDI), Toluylendiisocyanat (TDI) und Diiphenylmethandiisocyanat (MDI), oder Gemische von MDI mit höherkernigen Kondensationsprodukten des MDI, häufig als Roh-MDI bezeichnet. Vorzugsweise werden MDI und Roh-MDI, besonders bevorzugt MDI eingesetzt.

Als Verbindungen mit mindestens zwei mit Isocyanatgruppen reaktiven Wasserstoffatomen bii) und biii) können die oben aufgeführten Verbindungen eingesetzt werden.

Als Polyetherdiole bii1) können Polyole eingesetzt werden, die durch Polymerisation von Tetrahydrofuran hergestellt werden. Derartige Verbindungen sind allgemein bekannt und werden beispielsweise von der BASF AG unter dem Namen PolyTHF^{®}) vertrieben. Es können auch Polyetherdiole eingesetzt werden, die durch Anlagerung von Alkylenoxiden an zweifunktionelle Startsubstanzen, insbesondere Diole, hergestellt wurden. Als Diole können Ethylenglykol, Diethylenglykol, Propylenglykol, Dipropylenglykol oder Butandiole eingesetzt werden. Als Alkylenoxide werden üblicherweise Ethylenoxid und/oder Propylenoxid eingesetzt. Die Umsetzung der Startsubstanzen mit den Alkylenoxiden erfolgt üblicherweise unter Einsatz von Katalysatoren. Als Katalysatoren können basische Verbindungen, vorzugsweise Hydroxide von Alkalimetallen, insbesondere Kaliumhydroxid eingesetzt. In einer weiteren Ausführungsform werden als Katalysatoren die oben beschriebenen DMC-Katalysatoren eingesetzt.

Als Polyethertriole bii2) werden vorzugsweise Umsetzungsprodukte von dreifunktionellen Verbindungen, insbesondere Glyzerin und/oder Trimethylolpropan, mit Alkylenoxiden eingesetzt. Zu den eingesetzten Alkylenoxiden und zur Herstellung der Polyethertriole gilt das oben gesagte.

Die Herstellung der erfindungsgemäßen Urethangruppen und Isocyanatgruppen enthaltenden Prepolymere erfolgt in Abhängigkeit vom gewünschten Einsatzbereich in unterschiedlicher Weise. So ist zu unterscheiden zwischen erfindungsgemäßen Prepolymeren, die als Isocyanat-komponente für Polyurethan-Zweikomponenten-Systeme verwendet werden sollen und erfindungsgemäßen Prepolymeren, die als Einkomponenten-Polyurethan-Schäume ihren Einsatz finden sollen.

Im Falle der Verwendung als Isocyanatkomponente für Polyurethan-Zweikomponenten-Systeme erfolgt der Umsatz des alkoxylierten Polybutadienols (bi) mit einem Überschuss an Polyisocyanat, vorzugsweise Diisocyanat, in hierfür üblichen Reaktoren, vorzugsweise unter Normaldruck. Die Mitverwendung weiterer (bii1) Polyole ist hier weitestgehend auf Polyetherdiole beschränkt.

Die Umsetzung der OH-funktionellen Verbindungen (bi) und gegebenenfalls (bii1) mit überschüssigen Isocyanat kann bei Verwendung der OH- funktionellen Verbindungen bii) sowohl in zwei Stufen, vorzugsweise in der ersten Stufe Umsatz von (bi) und in der zweiten Stufe Umsatz von (bii1), als auch einer Stufe durch Umsatz des Gemisches aus (bi) und (bii1) erfolgen.

Bei der Herstellung der Prepolymere wird vorzugsweise das jeweilige Isocyanat, besonders bevorzugt Diisocyanat, im Reaktor vorgelegt, das alkoxylierte Polybutadienol (bi) oder das oben genannte Gemisch der OH- funktionellen Verbindungen bi) und bii) zudosiert, unter Rühren das Reaktionsgemisch erwärmt und so die Prepolymerisationsreaktion gestartet.

Die Reaktion wird im Temperaturbereich von 60°C bis 100°C, vorzugsweise 70°C bis 90°C über einen Zeitraum von 30 bis 120 min durch entsprechende Regelungsvorrichtungen durchgeführt.

Die Umsetzung kann kontinuierlich oder diskontinuierlich in üblichen Reaktoren, beispielsweise bekannten Rohr- oder Rührkesselreaktoren, gegebenenfalls in Gegenwart von üblichen Katalysatoren, die die Reaktion der OH-funktionellen Verbindungen mit den Isocyanatgruppen beschleunigen, sowie gegebenenfalls inerten Lösungsmitteln, d.h. gegenüber den Isocyanaten und OH-funktionellen Verbindungen nicht reaktiven Verbindungen, erfolgen.

Die Herstellung der Polyurethane erfolgt, wie beschrieben, durch Umsetzung der erfindungsgemäßen Prepolymere mit Verbindungen mit mindestens zwei mit Isocyanatgruppen reaktiven Wasserstoffatomen.

Als Verbindungen mit mindestens zwei mit Isocyanatgruppen reaktiven Wasserstoffatomen können vorzugsweise solche eingesetzt werden, die mindestens zwei Hydroxyl- und/oder Aminogruppen im Molekül aufweisen. Insbesondere weisen diese Verbindungen ein Molekulargewicht Mn zwischen 60 und 10000 g/mol auf. Besonders bevorzugt werden die Verbindungen mit mindestens zwei mit Isocyanatgruppen reaktiven Wasserstoffatomen ausgewählt aus der Gruppe, enthaltend mehrwertige Alkohole, Polyetheralkohole, Polyesteralkohole, Polyetherpolyamine, hydroxylgruppenhaltige Polycarbonate, hydroxylgruppenhaltige Polyacetale und beliebige Mischungen aus mindestens zwei dieser Verbindungen. Besonders bevorzugt sind mehrwertige Alkohole, Polyetheralkohole und Polyesteralkohole sowie Mischungen daraus.

Beispiele für mehrwertige Alkohole sind Alkandiole mit 2 bis 10, vorzugsweise 2 bis 6 Kohlenstoffatomen sowie höhere Alkohole, wie Glycerin, Trimethylolpropan oder Pentaerythrit. Weiterhin können natürliche Polyole, wie Rizinusöl, eingesetzt werden.

Die Polyetheralkohole weisen vorzugsweise eine Funktionalität im Bereich von 2 bis 8 auf. Ihre Herstellung erfolgt üblicherweise durch Anlagerung von Alkylenoxiden, insbesondere Ethylenoxid und/oder Propylenoxid, an H-funktionelle Startsubstanzen. Die Alkylenoxide können dabei einzeln, nacheinander oder als Mischung eingesetzt werden. Als Startsubstanzen kommen beispielsweise Wasser, Diole, Triole, höherfunktionelle Alkohole, Zuckeralkohole, aliphatische oder aromatische Amine oder Aminoalkohole in Betracht.

Besonders geeignet sind Polyetheralkohole mit einem mittleren Molekulargewicht zwischen 100 und 3000 g/mol und einer mittleren OH-Funktionalität von 2 bis 3. Besonders bevorzugte Startsubstanzen zur Herstellung dieser Polyetheralkohole sind Propylenglykol und Glyzerin. Bevorzugte Alkylenoxide sind Ethylenoxid und Propylenoxid.

Ebenfalls bevorzugt sind Polyesteralkohole mit einem mittleren Molekulargewicht zwischen 400 und 3000 g/mol, einer mittleren OH-Funktionalität von 2. Besonders bevorzugt sind Polyesteralkohole auf Basis von Adipinsäure. Die Herstellung der Prepolymere erfolgt, wie dargelegt, durch Umsetzung der Polyisocyanate mit den Verbindungen mit mindestens zwei mit Isocyanatgruppen reaktiven Wasserstoffatomen.

Die Umsetzung erfolgt üblicherweise in Anwesenheit von Katalysatoren. Als Katalysatoren, welche insbesondere die Reaktion zwischen den NCO-Gruppen der Diisocyanate und den Hydroxylgruppen der Polyalkohole bei der Herstellung der Prepolymere beschleunigen, können die nach dem Stand der Technik bekannten und üblichen stark basischen Amine sowie organische Metallverbindungen wie Titansäureester, Eisenverbindungen wie z.B. Eisen-(III)-acetylacetonat, Zinnverbindungen, z.B. Zinn-(II)-Salze von organischen Carbonsäuren, oder die Dialkylzinn-(IV)-Salze von organischen Carbonsäuren oder Gemische mit mindestens zwei der genannten Katalysatoren sowie synergistisch wirkende Kombinationen aus stark basischen Aminen und organischen Metallverbindungen eingesetzt werden. Die Katalysatoren können in üblichen Mengen, beispielsweise 0,002 bis 5 Gew.-%, bezogen auf die Polyalkohole, verwendet werden.

Je nachdem, ob geschäumte oder kompakte Polyurethane hergestellt werden sollen, erfolgt die Umsetzung in Anwesenheit oder in Abwesenheit von Treibmitteln.

Als Treibmittel kann Wasser verwendet werden, das mit Isocyanatgruppen unter Abspaltung von Kohlendioxid reagiert. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50 °C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan. Besonders bevorzugt eingesetzt werden Cyclopentan und/oder n-Pentan. Die genannten physikalischen Treibmittel können allein oder in beliebigen Kombinationen untereinander eingesetzt werden.

In einer besonderen Ausführungsform der Erfindung wird das erfindungsgemäße Prepolymer zur Herstellung von 1-Komponenten-Polyurethanschaum eingesetzt.

Bei der Herstellung der 1-Komponenten-Schäume erfolgt die Umsetzung des Polyisocyanats a) mit der Verbindung mit mindestens zwei mit Isocyanatgruppen reaktiven Wasserstoffatomen b) in Anwesenheit eines Treibmittels in einem Druckbehälter, vorzugsweise in einer Aerosoldose. Hierzu werden die Einsatzstoffe in dem gewünschten Verhältnis zusammen mit einem Treibmittel in einen Druckbehälter gefüllt, so dass im Druckbehälter das erfindungsgemäße Prepolymer freien Isocyanatgruppen entsteht. Übliche Treibmittel zur Herstellung der 1-Komponenten-Montageschäume sind beispielsweise R134a (Tetrafluorethan), R152a (1,1-Difluorethan), Dimethylether, Propan; n-Butan, iso-Butan, vorzugsweise Gemische aus Propan, n-Butan, iso-Butan.

Das Verfahren zur Herstellung der erfindungsgemäßen Urethangruppen und Isocyanatgruppen enthaltenden Prepolymere, welche als Einkomponentenschaum verwendet werden sollen, unterscheidet sich vom Verfahren der Herstellung der erfindungsgemäßen Prepolymere als Isocyanatkomponenten für 2-Komponenten-Schäume.

Bei der Herstellung der Prepolymemre welche als Einkomponentenschaum verwendet werden sollen, erfolgt der Umsatz im oben beschriebenen Druckbehälter in Gegenwart von Treibmitteln als Lösemittel unter erhöhten Druck, wobei hier vorteilhafter Weise das alkoxylierte Polybutadienol (bi) im Gemisch mit dem Polyethertriol (bii2) sowie weiteren Zusatzstoffen mit dem Polyisocyanat im Überschuss umgesetzt wird.

Als Polyisocyanat kann beispielsweise:
1) ein Polyisocyanat, vorzugsweise Polyphenylenpolymethylenpolyisocyanat,
2) ein Diisocyanat, vorzugsweise ein Diisocyanatprepolymer mit NCO-Endgruppen, hergestellt durch Umsetzung eines Polyetherdiols bii1) mit überschüssigem Diisocyanat,
3) das Urethangruppen und Isocyanatgruppen enthaltenden Prepolymere aus dem Polybutadienol (bi) im Gemisch mit dem Polyetherdiol (bii1) und überschüssigen Diisocyanat,
4) ein Gemisch der NCO-Gruppen tragenden Verbindungen nach obigen Angaben 1 bis 3.

Zur Herstellung der 1-Komponenten-Schäume wird der Druckbehälter entspannt. Dabei wird das austretende Prepolymer durch die Froth-Wirkung des Treibmittels aufgeschäumt und härtete durch die Luftfeuchtigkeit aus.

In einer weiteren Ausführungsform der Herstellung der 1-Komponenten-Schäume wird zunächst das erfindungsgemäße Prepolymer hergestellt und dieses zusammen mit einem Treibmittel in den Druckbehälter eingefüllt. Dazu werden weitere Verbindungen mit mindestens zwei mit Isocyanatgruppen reaktiven Wasserstoffatomen und, falls erforderlich, auch weitere Polyisocyanate zugegeben.

Vorzugsweise wird mindesten ein weiteres Polyol zugegeben. Diese sind vorzugsweise Polyethertriole mit einer Hydroxylzahl von 20 bis 160 mgKOH/g. Sie bewirken eine bessere Mischbarkeit der Komponenten in dem Druckbehälter und einer verbesserten Anpassung (Erhöhung) der Viskosität des Prepolymers zur Erhalt eines stabileren austretenden Schaumgemisches in der Verarbeitungsphase zum Einkomponentenschaum.

Ebenfalls möglich ist die Verwendung von Polyesterpolyolen mit einer Hydroxylzahl von 25 bis 250 mgKOH/g. Wenn Polyesterpolyole mitverwendet werden, dann werden sie üblicherweise in einem Verhältnis von Polyetherpolyol zu Polyesterpolyol von 5 : 1 bis 1 : 5 eingesetzt .

Die Polyesteralkohole werden auf üblichem Wege durch Umsetzung von mindestens zweifunktionellen Carbonsäuren mit mindestens zweifunktionellen Alkoholen hergestellt. Die eingesetzten Polyesteralkohole sind vorzugsweise bei Raumtemperatur flüssig., Darüber hinaus sind Polyesteralkohole bevorzugt, die aromatische Strukturen aufweisen. Diese werden insbesondere durch Verwendung von aromatischen Dicarbonsäuren, insbesondere Phthalsäure oder Phthalsäureanhydrid, eingebaut.

Üblicherweise erfolgt die Herstellung der 1-Komponenten-Schäume unter Mitverwendung Flammschutzmitteln, insbesondere von Alkyl- und/oder Arylphosphaten. Diese bewirken außerdem bei Einsatz eines Polyetherpolyol-Polyesterpolyol-Gemisches eine verbesserte Phasenstabilität sowohl des polyolischen Gemisches als auch des Prepolymers in dem Druckbehälter. Die Alkyl- bzw. Arylphosphaten können auch zusätzlich Chlor enthaltenden.

Mit den erfindungsgemäßen Urethangruppen und Isocyanatgruppen enthaltenden Prepolymeren konnten Produkte bereitgestellt werden, die sowohl in Zweikomponenten-Polyurethansystemen als auch in nur mit Wasser gehärteten Einkomponentenschäumen einsetzbar sind.

Die erfindungsgemäßen Prepolymere verleihen den daraus hergestellten Polyurethanen die Eigenschaften des über das Isocyanat eingebauten Polybutadiens und damit Gummicharakter.

Die Erfindung soll an den nachstehenden Beispielen näher erläutert werden.

### Ausführungsbeispiel 1 - (Herstellung des Polyetherpolyols bi))

In einem 1,5-I-Rührautoklaven wurden 495 g OH-funktionalisiertes Polybudatien (Typ Poly-BD R-20 LM, OHZ 105 mg KOH/g) zusammen mit 6,1 g einer 4,9 %igen Suspension von DMC-Katalysator, hergestellt gemäß EP 0 862 947, in Polypropylenglykol der Molmasse 1000 g/mol vorgelegt und bei 100 °C durch Anlegen von Vakuum und leichtem N₂-Strom entwässert. Nach Inertisierung des Reaktors mit 1 bar N₂ wurden 505 g Propylenoxid unter gutem Rühren bei einer Temperatur von 120 °C in den Reaktor dosiert, wobei ein Druck von 5 bar nicht überschritten wurde. Nach Ende der Dosierung ließ man bis zur Druckkonstanz ausreagieren. Anschließend wurde der Reaktorinhalt durch Destillation von Resten nicht umgesetzten Alkylenoxids und sonstigen flüchtigen Bestandteilen befreit und das erhaltene Polyetherpolyol ausgefüllt.

### Eigenschaften des erhaltenen Polyols:

- OH-Zahl: 54,5 mgKOH/g
- Viskosität bei 25 °C: 1636 mPas
- Säurezahl: 0,016 mgKOH/g
- H₂O-Gehalt: 0,008%

### Ausführungsbeispiel 2 - (Anwendung: 2-Komponenten-Polyurethan-Gießharz)

### 2.1 Herstellung der Polyolkomponente

Aus 450 g des Polyetherpolyols nach Ausführungsbeispiel1, 447 g Polytetrahydrofuran, Molekulargewicht 100 g/mol, 40g Trockenmittel auf Basis von Natriumalumosilikat mit Zeolithstruktur, 50 %ig in Rizinusöl, 60 g 1,4-Butandiol und 3 g Triethylendiamin 33% ig in Dipropylenglykol wurde durch Vermischen eine Polyolkomponente hergestellt.

### 2.2 Herstellung der Isocyanatkomponente

In einem Laborreaktor mit Heiz- und Kühlvorrichtung wurden 700 g 4,4'-Diphenylmethandiisocyanat, (Handelsname: Lupranat^{®} ME) sowie 60 g carbodiimidmodifiziertes 4,4'-Diphenylmethandiisocyanat (Handelsname: Lupranat^{®} MM103) vorgelegt. 200 g des Polyetherpolyols nach Ausführungsbeispiel1, 40g Dipropylenglykol und 0,2 g Diglykol-bis-chlorformiat wurden gemischt und in dieser Form langsam dem Isocyanatgemisch zudosiert. Neben der unter Wärmetönung stattfindenden Prepolymerreaktion wurde die Reaktion so gesteuert, dass bei einer Temperatur von 80 °C innerhalb von 60 min die Prepolymerreaktion weitgehend abgeschlossen war. Nach Abkühlung erhielt man ein Isocyanatprepolymer mit folgenden Daten:
Isocyanatgehalt: 21,9 Gew.-% NCO
Viskosität: 510 mPas (bei 25 °C)

### 2.3 Herstellung des Formteils und dessen Eigenschaften

| Eigenschaft | PUR-Gießharz nach Ausführungsbeispiel 2 |
|---|---|
| Härte | 80°Shore A |
| Zugfestigkeit | 9,0 N/mm² |
| Bruchdehnung | 297 % |
| Weiterreißfestigkeit | 15,2 N/mm |
| Rückprallelastizität | 52% |

### Ausführungsbeispiel 3 - (Anwendung: 1-Komponenten-Polyurethan-Aerosolschaum)

### 3.1 Herstellung der Polyolkomponente

Aus 401 g des Polyetherpolyols nach Ausführungsbeispiel1, 95 g eines Polyetherpolyols auf Basis Propylenglykol/Propylenoxyd/Ethylenoxyd Molekulargewicht 3400 (Funktionalität 1,76), 60 g eines halogenierten Polyethertriols Molekulargewicht 650 (Handelsname: IXOL^{®} B 251), 80 g eines Polyethylenglykols Molekulargewicht 600, 25 g eines Schaumstabilisators (Polyalkylenglykol-polysiloxancopolymer, Handelsname: TEGOSTAB^{®} B2219), 8 g Dimorpholinodiethylether, 330 g Trichlorpropylphosphat, 0,5 g dünnflüssiges Paraffinöl und 0,5 g eines Siliconöl/Polyetherpolyol-gemisches (Handelsname: TEGOSTAB^{®} B8939) wurde durch Vermischung eine Polyolkomponente hergestellt.

### 3.2 Herstellung der Isocyanatkomponente

In einem Laborreaktor mit Heiz- und Kühlvorrichtung wurden 870g 4,4'-Dipenylmethandiisocyanat vorgelegt. Aus 49 g eines Polypropylenglykols mit einem Molgewicht Mn von 450 g/mol und 82g Dipropylenglykol wurde ein Gemisch hergestellt und dieses dem Isocyanat langsam unter rühren zugefügt. Die einsetzende Prepolymerreaktion wurde so gesteuert, dass diese bei einer Temperatur von ca. 80 °C innerhalb von 60 min weitgehend abgeschlossen war.

Das Isocyanatprepolymer hatte bei einem Isocyanatgehalt von 23 % NCO eine Viskosität von 650 mPas bei 25 °C.

### 3.3 Herstellung des Schaumes und dessen Eigenschaften

318 g der Polyolkomponente nach Ausführungsbeispiel 3.1 wurden in eine 1 Liter Aerosoldose gefüllt. Nachfolgend wurden 350 g der Isocyanatkomponente nach Ausführungsbeispiel 4.2 zugesetzt und die Aerosoldose mittels eines Kippventils verschlossen. Durch dieses Ventil wurden nachfolgend 47g Dimethylether und 109 g Tetrafluorethan dosiert und der Inhalt der Aerosoldose durch intensives Schütteln homogenisiert. Unter Wärmetönung erfolgte die Prepolymerreaktion. Zur kurzfristigen Testung (die Prepolymerreaktion war bei Raumtemperatur erst in 3 bis 5 Tagen abgeschlossen) erfolgte eine Wärmelagerung bei 40 - 50 °C über 24 h. Nach der Wärmelagerung und Abkühlung war der 1 Komponenten-Aerosolschaum testbar. Zu diesem Zweck wurde auf einen ebenen Untergrund Papiervlies ausgebreitet und angefeuchtet. Durch Kippbewegung des Ventils mit aufgeschraubten Dosierröhrchen wurde der Inhalt der Aerosoldose auf das angefeuchtete Vlies in Schaumsträngen ausgetragen. Durch lagenförmigen Austrag und Zwischenfeuchten erhielt man einen Schaumkörper zur Testung.

Der Schaum zeichnete sich durch:
Weichheit (analog eines 2-Komponenten-Weichschaums)
Hohe Elastizität
Hohe Dimensionsstabilität aus.

| Schaum-Eigenschaft | PUR-Aerosol-Weichschaum nach Ausführungsbeispiel 4 |
|---|---|
| Klebfreizeit | 9 min |
| Schneidzeit | 16 min |
| Zugfestigkeit | 6 N/cm² |
| Dehnung | 90% |
| Dimensionsstabilität | kein Schrumpf |

## Patentansprüche

1. Urethangruppen und Isocyanatgruppen enthaltende Prepolymere, hergestellt durch Umsetzung von
a) Polyisocyanaten mit
b) Verbindungen mit mindestens zwei mit Isocyanatgruppen reaktiven Wasserstoffatomen,
**dadurch gekennzeichnet, dass** die Verbindungen mit mindestens zwei mit Isocyanatgruppen reaktiven Wasserstoffatomen b) mindestens ein Polyol bi), hergestellt durch Umsetzung von eines Polybutadienpolyols mit Alkylenoxid unter Verwendung eines DMC-Katalysators, enthalten.

2. Urethangruppen und Isocyanatgruppen enthaltende Prepolymere nach Anspruch 1, **dadurch gekennzeichnet, dass** sie einen NCO-Gehalt im Bereich zwischen 6 und 30 Gew.-% aufweisen.

3. Urethangruppen und Isocyanatgruppen enthaltende Prepolymere nach Anspruch 1, **dadurch gekennzeichnet, dass** das Polyol bi) eine Hydroxylzahl im Bereich zwischen 20 und 180 mgKOH/g aufweist.

4. Urethangruppen und Isocyanatgruppen enthaltende Prepolymere nach Anspruch 1, **dadurch gekennzeichnet, dass** die Verbindungen mit mindestens zwei mit Isocyanatgruppen reaktiven Wasserstoffatomen b) mindestens ein weiteres Polyol bii) enthält.

5. Urethangruppen und Isocyanatgruppen enthaltende Prepolymere nach Anspruch 1, **dadurch gekennzeichnet, dass** das weitere Polyol bii) ein Polyetherdiol bii1) mit einer Hydroxylzahl im Bereich zwischen 25 und 1800 mgKOH/g ist.

6. Urethangruppen und Isocyanatgruppen enthaltende Prepolymere nach Anspruch 1, **dadurch gekennzeichnet, dass** das weitere Polyol bii) ein Polyethertriol bii2) mit einer Hydroxylzahl im Bereich zwischen 20 und 160 mgKOH/g ist.

7. Urethangruppen und Isocyanatgruppen enthaltende Prepolymere nach Anspruch 1, **dadurch gekennzeichnet, dass** das weitere Polyol bii) ein Polyesteralkohol bii3) mit einer Hydroxylzahl im Bereich von 25 und 250 mgKOH/g ist.

8. Urethangruppen und Isocyanatgruppen enthaltende Prepolymere nach Anspruch 1, **dadurch gekennzeichnet, dass** das weitere Polyol bii) ein Mischung aus einem Polyetheralkohol bii2) und einem Polyesteralkohol bii3) ist.

9. Urethangruppen und Isocyanatgruppen enthaltende Prepolymere nach Anspruch 1, **dadurch gekennzeichnet dass** bii2) und bii3) im Gewichtsverhältnis 5 : 1 bis 1 : 5 vorliegen.

10. Urethangruppen und Isocyanatgruppen enthaltende Prepolymere nach Anspruch 1 und 9, **dadurch gekennzeichnet, dass** die Verbindungen mit mindestens zwei mit Isocyanatgruppen reaktiven Wasserstoffatomen als Zusatzstoff ein Alkyl- und/oder Arylphosphat enthalten.

11. Verfahren zur Herstellung von Urethangruppen und Isocyanatgruppen enthaltenden Prepolymeren durch Umsetzung von a) Polyisocyanaten mit b) Verbindungen mit mindestens zwei mit Isocyanatgruppen reaktiven Wasserstoffatomen, **dadurch gekennzeichnet, dass** die umgesetzten Verbindungen mit mindestens zwei mit Isocyanatgruppen reaktiven Wasserstoffatomen b) mindestens ein Polyol bi), hergestellt durch Umsetzung von eines Polybutadienpolyols mit Alkylenoxid unter Verwendung eines DMC-Katalysators, enthalten.

12. Verfahren nach Anspruch 11, **dadurch gekennzeichnet, dass** neben den Polyol bi) nach Anspruch 3 mindest ein weiteres Polyol bii) verwendet wird.

13. Verfahren zur Herstellung von 1-Komponenten-Polyurethan-Schaumstoffen durch Umsetzung von
a) Polyisocyanaten mit
b) Verbindungen mit mindestens zwei mit Isocyanatgruppen reaktiven Wasserstoffatomen,
**dadurch gekennzeichnet, dass** die Verbindungen mit mindestens zwei mit Isocyanatgruppen reaktiven Wasserstoffatomen b) mindestens ein Polyol bi), hergestellt durch Umsetzung von eines Polybutadienpolyols mit Alkylenoxid unter Verwendung eines DMC-Katalysators, enthalten und die Umsetzung in Anwesenheit von Treibmitteln in einem Druckbehälter durchgeführt wird und das so hergestellte Produkt nach der Entspannung des Druckbehälters mit Feuchtigkeit zu einem 1-Komponenten-Schaum aushärtet.

14. Verfahren zur Herstellung von 1-Komponenten-Polyurethan-Schaumstoffen, **dadurch gekennzeichnet, dass** ein Urethangruppen und Isocyanatgruppen enthaltende Prepolymer nach Anspruch 1 in einem Druckbehälter mit weiteren Verbindungen mit mindestens zwei mit Isocyanatgruppen reaktiven Wasserstoffatomen und gegebenenfalls weiteren Isocyanaten in Anwesenheit von Treibmitteln zu einem Isocyanat- und Urethangruppen enthaltenden Produkt umgesetzt wird, das nach der Entspannung des Druckbehälters mit Feuchtigkeit zu einem 1-Komponenten-Schaum aushärtet.

15. Verfahren zur Herstellung von 1-Komponenten-Polyurethan-Schaumstoffen nach Anspruch 14, **dadurch gekennzeichnet, dass** als weiteren Verbindungen mit mindestens zwei mit Isocyanatgruppen reaktiven Wasserstoffatomen Polyole bii) nach einen der Ansprüche 6 bis 9 eingesetzt werden.

16. Verfahren zur Herstellung von 1-Komponenten-Polyurethan-Schaumstoffen nach Anspruch 13 bis 15, **dadurch gekennzeichnet, dass** der Umsatz zum Urethangruppen und Isocyanatgruppen enthaltenden Prepolymer bis zu einem Isocyanatgehalt von 6 bis 18 % NCO geführt wird

17. Verfahren zur Herstellung von Polyurethanen durch Umsetzung von Umsetzung von a) Polyisocyanaten mit b) Verbindungen mit mindestens zwei mit Isocyanatgruppen reaktiven Wasserstoffatomen, **dadurch gekennzeichnet, dass** als Polyisocyanate a) Urethangruppen und Isocyanatgruppen enthaltende Prepolymere nach Anspruch 1 eingesetzt werden.

18. Verfahren nach Anspruch 17, **dadurch gekennzeichnet, dass** das Prepolymere nach Anspruch 1 im Gemisch mit weiteren Isocyanaten eingesetzt wird.
